# EUROPEAN PATENT APPLICATION

(11) **EP 4 202 446 A1**
(43) Date of publication of application: **28.06.2023**
(21) Application number: 22215861.0
(22) Date of filing: 22.12.2022
(51) Int. Cl.: G01P 1/02, G01D 11/24, G01D 11/30

(54) **SPEED SENSOR AND MANUFACTURING METHOD THEREFOR**

(30) Priority: 24.12.2021 CN 202111603914
(71) Applicant: Continental Automotive Technologies GmbH, 30165 Hannover (DE)
(72) Inventor: Zhang, Yang, 60488 Frankfurt am Main (DE); Zhao, Chengwei, 60488 Frankfurt am Main (DE); Lu, Shan, 60488 Frankfurt am Main (DE); Chen, Dan, 60488 Frankfurt am Main (DE)
(74) Representative: Continental Corporation

(57) **Abstract**

The present invention provides a speed sensor and a manufacturing method therefor. The speed sensor comprises a sensor detection part and a flange. The flange comprises a first flange segment and a second flange segment, and the flange is formed by combining the first flange segment and second flange segment. Once combined, the first flange segment and second flange segment enclose an accommodating hole capable of accommodating the sensor detection part. The speed sensor and manufacturing method therefor of the present invention solve problems in the prior art, achieve the standardization, universalization and flexibilization of speed sensors, and greatly reduce the development cycle and manufacturing costs.

## Description

### Technical Field

The present invention relates to the technical field of detection, in particular to a speed sensor and a manufacturing method therefor.

### Background Art

An existing speed sensor is injected molded from resin, to meet actual installation requirements. Once the speed sensor has been manufactured, the height of the sensing face of the head thereof (i.e. the detecting end of the sensor detection part) above the flange and the phase angle are both fixed values, which cannot be adjusted. To match different customers' installation requirements in different operating conditions, it is necessary to design speed sensors with different structures, and develop different molds to manufacture these speed sensors with different structures. Clearly, this consumes a considerable amount of manpower and resources. Some customers have quite similar installation requirements, but two different molds need to be developed to design similar sensor structures, which also causes wastage of resources. Furthermore, new products have a long mold development cycle, and a considerable amount of testing verification is subsequently needed; clearly, this cannot meet customers' time requirements either. Thus, there is a problem in urgent need of a solution in the art: how to achieve the standardization, flexibilization and universalization of speed sensors, and reduce the development cycle and costs.

### Summary of the Invention

To overcome the shortcomings in the prior art, the present invention provides a speed sensor and a manufacturing method therefor, which achieve the standardization and universalization of speed sensor manufacturing, and enable flexible assembly according to different requirements, thus greatly reducing the development cycle and manufacturing costs.

To achieve the above objective, the present invention provides a speed sensor, comprising a sensor detection part and a flange, wherein the flange comprises a first flange segment and a second flange segment, the flange is formed by combining the first flange segment and second flange segment, and once combined, the first flange segment and second flange segment together enclose an accommodating hole capable of accommodating the sensor detection part.

Preferably, each pair of the sensor detection part, the first flange segment and the second flange segment is fixedly connected together.

Preferably, the first flange segment and second flange segment are constructed as two separate and independent components.

Preferably, the first flange segment and second flange segment are constructed as conjoined components, partially connected to each other and hinged such that the two segments are able to move relative to each other.

Preferably, each pair of the sensor detection part, the first flange segment and the second flange segment is fixed together by ultrasonic welding.

Preferably, weld fusion lines are provided on contact surfaces of the first flange segment and second flange segment.

Preferably, multiple positioning ribs are provided on an outer wall of the sensor detection part, the positioning ribs extending in the direction of extension of the sensor detection part.

Preferably, multiple slots are formed in an inner wall of the accommodating hole enclosed by the first flange segment and second flange segment, the slots being able to accommodate the positioning ribs.

Preferably, the slots and the positioning ribs are provided in equal numbers, and are distributed uniformly in the circumferential direction.

To achieve the abovementioned objective, the present invention further provides a manufacturing method for a speed sensor, the manufacturing method comprising at least the following steps:
a step of separately manufacturing the sensor detection part, the first flange segment and the second flange segment;
a step of fitting together the sensor detection part, the first flange segment and the second flange segment;
a step of fixing together each pair of the sensor detection part, the first flange segment and the second flange segment.

Preferably, the fixing step comprises a step of fixing together each pair of the sensor detection part, the first flange segment and the second flange segment by ultrasonic welding.

Preferably, the step of fitting together comprises a step of assembly in accordance with preset values of axial distance and circumferential angle of the sensor detection part relative to the first flange segment and second flange segment.

Compared with the prior art, the speed sensor and manufacturing method therefor of the present invention employ a split-body structure to manufacture a conventional speed sensor that is injection moulded in one piece. That is to say, the speed sensor is split into three constituent components, specifically the sensor detection part, the first flange segment and the second flange segment, and each of these constituent components can be produced in a standardized and universal way. Depending on customer requirements in different operating conditions, the required speed sensor can be obtained simply by fitting together the three constituent components according to different requirements and fixing them by fusion; thus, the flexibility of assembly of the three constituent components is higher. Thus, the technical solution of the present invention effectively avoids wastage of manpower and resources due to developing an excessive number of molds, increases production efficiency, lowers costs, and shortens the development cycle of new products.

### Brief Description of the Drawings

Fig. 1 is a three-dimensional schematic drawing of a speed sensor in a preferred embodiment of the present invention.
Fig. 2 is an exploded schematic drawing of the speed sensor in a preferred embodiment of the present invention.
Fig. 3 is a schematic drawing of the first flange segment in a preferred embodiment of the present invention.
Fig. 4 is a schematic drawing of the second flange segment in a preferred embodiment of the present invention.

### Detailed Description of Embodiments

The solution of the present invention will be further described below in conjunction with the drawings and preferred embodiments.

Many details are given in the following description so that those skilled in the art can understand the invention more comprehensively. However, it will be obvious to those skilled in the art that the invention can be realized without some of these details. In addition, it should be understood that the invention is not limited to the specific embodiments described. On the contrary, one may consider using any combination of the following characteristics and elements to implement the invention, regardless of whether they relate to different embodiments. Therefore, the following aspects, characteristics, embodiments and advantages are only used to describe the invention, and should not be regarded as elements or definitions of the claims, unless expressly specified in the claims. In addition, terms indicating direction herein, such as up, down, left, right, upper side, lower side, etc., are merely based on the relative positions of components in the drawing concerned for the convenience of description, and should not be construed as limiting the scope of protection.

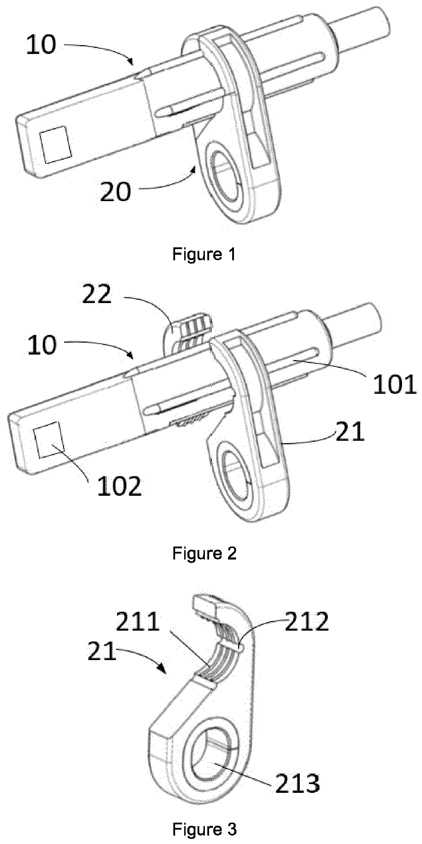

Fig. 1 is a three-dimensional schematic drawing of a speed sensor in a preferred embodiment of the present invention; Fig. 2 is an exploded schematic drawing of the speed sensor in a preferred embodiment of the present invention.

Referring to Figs. 1 and 2, in one embodiment of the present invention, a speed sensor is provided, comprising a sensor detection part 10 and a flange 20. The sensor detection part 10 is constructed as an independent component, formed by a resin or plastic material from a chip and an insertion pin, etc. by an injection molding process. The flange 20 comprises a first flange segment 21 and a second flange segment 22. As shown in Fig. 2, the first flange segment 21 and second flange segment 22 are constructed as two separate and independent components; alternatively, in other embodiments, the first flange segment 21 and second flange segment 22 may also be constructed as conjoined components, partially connected to each other and hinged such that the two segments are able to move relative to each other. Once combined, the first flange segment 21 and second flange segment 22 form the flange 20; moreover, once combined, the first flange segment 21 and second flange segment 22 enclose an accommodating hole capable of accommodating the sensor detection part 10. When assembly is performed, the sensor detection part 10 is able to move axially and rotate circumferentially in the accommodating hole of the flange 20, to adjust an axial distance and circumferential phase angle of a head sensing face 102 of the sensor detection part 10 relative to the flange 20.

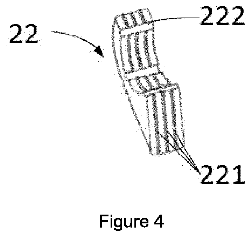

Fig. 3 is a schematic drawing of the first flange segment in a preferred embodiment of the present invention; Fig. 4 is a schematic drawing of the second flange segment in a preferred embodiment of the present invention.

Referring to Figs. 3 and 4, weld fusion lines 211 are provided on the first flange segment 21, specifically on an accommodating hole surface in contact with the sensor detection part 10; preferably, there are three weld fusion lines 211, spaced apart parallel to each other. The first flange segment 21 is also provided with an installation hole 213 for a fixing bolt to pass through. Weld fusion lines 221 are also provided on the second flange segment 22, specifically on an accommodating hole surface in contact with the sensor detection part 10 and on surfaces in contact with the first flange segment 21; preferably, there are three weld fusion lines 211, spaced apart parallel to each other. The weld fusion lines 211, 221 can change to a molten state when heated by a fusion welding process, in particular by ultrasonic welding, etc. Once the sensor detection part 10, the first flange segment 21 and the second flange segment 22 have been fitted together, the weld fusion lines between the three components are heated to a molten state by fusion welding, such that gaps between each pair of the three components are filled by fusion line material in the molten state; once cooled, each pair of the three components is firmly fused together, finally forming a speed sensor that meets requirements.

Furthermore, as shown in Fig. 2, multiple positioning ribs 101 are provided on an outer wall of the sensor detection part 10; the multiple positioning ribs 101 extend in the direction of extension of the sensor detection part 10. Multiple slots 212, 222 are respectively provided in accommodating hole inner walls of the first flange segment 21 and second flange segment 22 that are in contact with the sensor detection part 10. These slots 212, 222 can accommodate the multiple positioning ribs 101 on the sensor detection part 10. The number of slots 212, 222 is no fewer than the number of positioning ribs 101, so that all of the positioning ribs 101 can be accommodated in the slots 212, 222. Preferably, the slots 212, 222 and the positioning ribs 101 are provided in equal numbers, and are distributed uniformly in the circumferential direction.

When assembly is performed, the positioning ribs 101 of the sensor detection part 10 can slide in the slots 212, 222, in order to adjust the axial distance between the head sensing face 102 of the sensor detection part 10 and the flange 20; and the slots 212, 222 can apply a circumferential positioning action to the positioning ribs 101, in order to keep the sensor detection part 10 at a predetermined circumferential angle relative to the flange 20.

In an embodiment of the present invention, a manufacturing method for manufacturing the speed sensor described above is also provided.

The manufacturing method comprises at least the following steps:
A component pre-manufacturing step, in which three constituent components, specifically the sensor detection part 10, the first flange segment 21 and the second flange segment 22, are separately manufactured. These three constituent components may be manufactured once or multiple times by mold injection molding or another process.
A component assembly step, in which the sensor detection part 10, the first flange segment 21 and the second flange segment 22 are fitted together in accordance with requirements. When assembly is performed, the axial distance and circumferential phase angle of the sensor detection part 10 relative to the first flange segment 21 and second flange segment 22 are adjusted to preset values according to customer requirements.
A fixing step, in which the sensor detection part 10, the first flange segment 21 and the second flange segment 22 are fixed together by fusion welding, e.g. ultrasonic welding, between each pair thereof.

Although the invention has been disclosed above with preferred embodiments, the invention is not limited to these. Any change or modification made by those skilled in the art without departing from the spirit and scope of the present invention should fall within the scope of protection of the invention. Therefore, the scope of protection of the invention should be the scope defined by the claims.

## Claims

1. A speed sensor, comprising a sensor detection part and a flange, wherein the flange comprises a first flange segment and a second flange segment, the flange is formed by combining the first flange segment and second flange segment, and once combined, the first flange segment and second flange segment enclose an accommodating hole capable of accommodating the sensor detection part.

2. The speed sensor as claimed in claim 1, wherein each pair of the sensor detection part, the first flange segment and the second flange segment is fixedly connected together.

3. The speed sensor as claimed in claim 1, wherein the first flange segment and second flange segment are constructed as two separate and independent components.

4. The speed sensor as claimed in claim 1, wherein the first flange segment and second flange segment are constructed as conjoined components, partially connected to each other and hinged such that the two segments are able to move relative to each other.

5. The speed sensor as claimed in claim 2, wherein each pair of the sensor detection part, the first flange segment and the second flange segment is fixed together by ultrasonic welding.

6. The speed sensor as claimed in any one of claims 1 - 5, wherein weld fusion lines are provided on contact surfaces of the first flange segment and second flange segment.

7. The speed sensor as claimed in any one of claims 1 - 5, wherein multiple positioning ribs are provided on an outer wall of the sensor detection part, the positioning ribs extending in the direction of extension of the sensor detection part.

8. The speed sensor as claimed in claim 7, wherein multiple slots are formed in an inner wall of the accommodating hole enclosed by the first flange segment and second flange segment, the slots being able to accommodate the positioning ribs.

9. The speed sensor as claimed in claim 8, wherein the slots and the positioning ribs are provided in equal numbers, and are distributed uniformly in the circumferential direction.

10. A manufacturing method for a speed sensor, wherein the speed sensor is the speed sensor as claimed in any one of claims 1 - 9, and the manufacturing method comprises at least the following steps:
a step of separately manufacturing the sensor detection part, the first flange segment and the second flange segment;
a step of fitting together the sensor detection part, the first flange segment and the second flange segment;
a step of fixing together each pair of the sensor detection part, the first flange segment and the second flange segment.
